# EUROPEAN PATENT SPECIFICATION

(11) **EP 3 844 848 B1**
(45) Date of publication and mention of the grant of the patent: **01.11.2023**
(21) Application number: 19762146.9
(22) Date of filing: 30.08.2019
(51) Int. Cl.: H01R 39/38, H01R 39/42, H01R 39/44, B60S 1/08

(54) **WINDSCREEN WIPER MOTOR AND METHOD OF ASSEMBLING THE WINDSCREEN WIPER MOTOR**
SCHEIBENWISCHERMOTOR UND VERFAHREN ZUM ZUSAMMENBAU DES SCHEIBENWISCHERMOTORS
MOTEUR D'ESSUIE-GLACE DE PARE-BRISE ET PROCÉDÉ D'ASSEMBLAGE DU MOTEUR D'ESSUIE-GLACE DE PARE-BRISE

(30) Priority: 30.08.2018 DE 102018121225
(43) Date of publication of application: 07.07.2021
(73) Proprietor: Valeo Systèmes d'Essuyage, 78322 Le Mesnil Saint Denis (FR)
(72) Inventor: STEFANI, Siegfried, 74321 Bietigheim-Bissingen (DE)
(74) Representative: Valeo Visibility
(86) International application number: PCT/EP2019/073276
(87) International publication number: WO 2020/043910

(56) References cited:
- EP-A2- 1 324 439

## Description

### Prior art

The invention relates to a windscreen wiper motor with the features of the preamble of claim 1. Furthermore, the invention relates to a method of assembling a windscreen wiper motor according to the invention.

A windscreen wiper motor with the features of the preamble of claim 1 is known from the applicant's DE 10 2017 110 470 A1, which is a subsequently published document. The known windscreen wiper motor is distinguished by a specially designed carbon brush holder plate, in which, when an anchor is assembled, the carbon brushes serving for making contact with the anchor are positioned in a position spaced from the collector of the anchor by means of a frictional connection in guide elements for the carbon brushes in the carbon brush holder plate. The frictional connection is brought about by spring elements which act on a side surface of the corresponding carbon brush and brings the carbon brush into contact with the opposite side wall. After the anchor is assembled, the spring elements have to be positioned from the one side surface onto the rear side of the carbon brush opposite the collector so that the spring elements act upon the carbon brushes with a contact force in the direction of the collector. This is brought about in a subsequent assembly step by means of a motor housing which is pushed axially over the anchor and, in the process, enters with an actuating portion of the motor housing into operative contact with an activation device arranged in the region of the carbon brush holder plate. That section of the spring element which acts on the side surface of the carbon brush is moved by the activation device in the direction of the end side of the carbon brush opposite the collector, and the frictional connection of the carbon brush with the side wall of the guide element is removed. Essential features in the windscreen wiper motor known from the document mentioned are that the activation device is part of the carbon brush holder plate and that the motor housing has the actuating section for the activation device on the carbon brush holder plate.

A windscreen wiper motor according to the preamble of claim 1 is io known from EP 1 324 439.

### Disclosure of the invention

The windscreen wiper motor according to the invention with the features of claim 1 is distinguished in that the activation device is designed as a component part of the transmission housing. This simplifies the structural design of the carbon brush holder plate.

Advantageous developments of the windscreen wiper motor according to the invention are cited in the dependent claims.

In a structurally preferred refinement of the activation device, it is provided that the activation device has a contact surface, the radial distance of which with regard to a longitudinal axis of the carbon brush holder plate decreases in an assembly direction of the carbon brush holder plate in the transmission housing.

Such a structural refinement has the effect, when the carbon brush holder plate is fitted axially with respect to the transmission housing, that the contact surface enters into operative connection with the spring element on the carbon brush holder plate and permits the desired movement of the spring element from the side surface of the carbon brush to the rear end surface thereof facing away from the collector.

In a specific development of the last-made proposal, the contact surface is in the form of a slope which extends at an oblique angle to the longitudinal axis of the carbon brush holder plate. By means of such an obliquely designed or arranged contact surface, a continuous, uniform movement of the spring element from the assembly position into the final position of the carbon brush holder plate is produced as the carbon brush holder plate moves relative to the transmission housing.

In a refinement of the activation device that is advantageous in terms of manufacturing and that can furthermore be realized on the transmission housing without additional costs, it is proposed that the contact surface be in the form of part of a rib-shaped extension on a housing wall of the transmission housing.

In a further preferred refinement permitting particularly secure positioning of the carbon brush in the guide element of the carbon brush holder plate, the side surface of the carbon brush has a recess in which in the assembled position of the carbon brush holder plate a contact section of the spring element is in positively-connected contact so that the carbon brush is aligned in the direction of the longitudinal axis to the guide element. Such a recess has the effect that an increased force is initially required to move the contact portion out of the recess of the carbon brush. Furthermore, the recess brings about a centering of the carbon brush in the longitudinal direction in the guide element of the carbon brush holder plate.

In order to minimize abrasion of the carbon brush by means of the contact section of the spring element during the movement along the carbon brush or during the action on the end surface opposite the collector of the anchor, it is provided that the contact section of the spring element is curved and can be applied to both the side surface as well as to the second end surface of the carbon brush.

A further aspect of the invention relates to the positioning or ensuring of the correct position of the carbon brush holder plate when assembling same in the transmission housing. In order in this regard to ensure the correct angular position of the carbon brush holder plate with respect to the transmission housing, it is provided that formed on the carbon brush holder plate is at least one guide element for positioning the carbon brush holder plate at a suitable angle in relation to the transmission housing when assembling the carbon brush holder plate in the transmission housing, wherein the at least one guide element interacts with a counter-element on the transmission housing.

It is very particularly preferred, in a development of the last-made proposal, if several guide elements and interacting counter-elements are provided. An irregular arrangement of the guide elements and counter-elements with respect to the longitudinal axis of the carbon brush holder plate makes it possible to ensure a single and unambiguous positioning between the carbon brush holder plate and the transmission housing.

An arrangement of the at least one guide element on the outer circumference of the carbon brush holder plate is preferred.

Furthermore, the invention relates to a method of assembling a windscreen wiper motor according to the invention and described to this extent. The assembly method according to the invention is distinguished by at least the following steps:
In a first step, pre-assembly of the carbon brush holder plate takes place in a transmission housing, wherein the carbon brush is arranged in the assembly position and the carbon brush holder plate is arranged in an intermediate position at a distance from the operating position in the transmission housing. Subsequently, axial insertion of the anchor into the transmission housing takes place up to a position in which the collector overlaps the carbon brush. Finally, the carbon brush holder plate and the anchor are moved by joint parallel movement from an intermediate position into the operating position, wherein the activation device through coming into contact with the carbon brush moves the carbon brush in the guide element in the direction toward the collector until the spring element comes into contact with the second end face of the carbon brush opposite the collector and presses the carbon brush against the collector.

Further advantages, features and details of the invention emerge from the description below of preferred exemplary embodiments and with reference to the drawing, in which:
- Fig. 1: shows a perspective illustration of a partial region of a windscreen wiper motor, in which a carbon brush holder plate is in an intermediate position in a transmission housing,
- Fig. 2: shows a detail of fig. 1 in an enlarged perspective illustration,
- Fig. 3: shows an illustration of the windscreen wiper motor according to fig. 1 during installation of an anchor,
- Fig. 4and Fig. 5: each show details of the windscreen wiper motor in the region of a carbon brush during the installation of the carbon brush holder plate, in a perspective illustration, and
- Fig. 6: shows a perspective cross section through the windscreen wiper motor in the region of the carbon brush holder plate in the operating position of the carbon brushes.

Identical elements or elements having the same function are provided with the same reference signs in the figures.

The windscreen wiper motor 10 partially illustrated in the figures serves for at least indirectly moving a wiper blade (not illustrated) for cleaning a vehicle windscreen, for example via a wiper linkage.

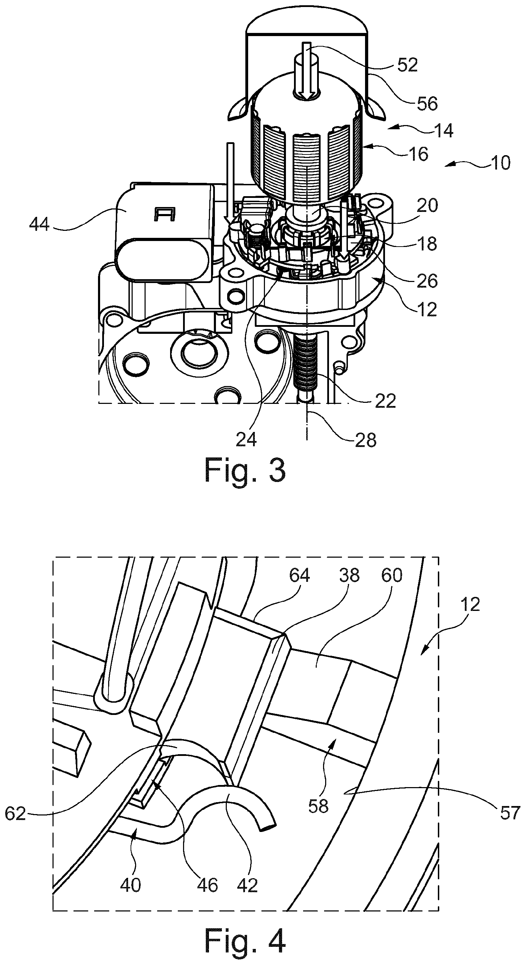

The windscreen wiper motor 10 has a transmission housing 12 which is in particular of multi-part design and is preferably formed from plastic in the form of one or more injection molded parts. As can best be seen with reference to fig. 3, an electric motor 14 can be flange-mounted onto an end side of the transmission housing 12. The electric motor 14 has an anchor 16 with a collector 18 which is arranged in the region of an anchor shaft 20. The collector 18 is electrically connected in a known manner to wire windings (not illustrated) of the anchor 16, wherein the wire windings can be energized via the collector 18. Furthermore, the anchor shaft 20 has a toothing region 22 which, according to fig. 3, projects into the transmission housing 12 and meshes there with a mating toothing (not shown) of a gear wheel mounted rotatably in the transmission housing 12. The gear wheel in turn is coupled at least indirectly to an output shaft which serves for moving the wiper blade. Since such a design of a windscreen wiper motor 10 is known per se, it is not illustrated in the figures for simplification reasons.

Furthermore, the collector 18 of the anchor 16 interacts with a carbon brush holder plate 26 which is insertable into a substantially circular recess 24 of the transmission housing 12. The carbon brush holder plate 26, which is substantially annular, is composed of plastic and is in the form of an injection molded part, has a longitudinal axis 28 running perpendicular to the plane of the carbon brush holder plate 26 and parallel to the anchor shaft 20, with a (central) passage opening 30 formed concentrically about the longitudinal axis 28. The diameter of the passage opening 30 makes it possible, according to the illustration of fig. 3, to guide the anchor 16, at least with the region of its collector 18, through the passage opening 30 during the installation.

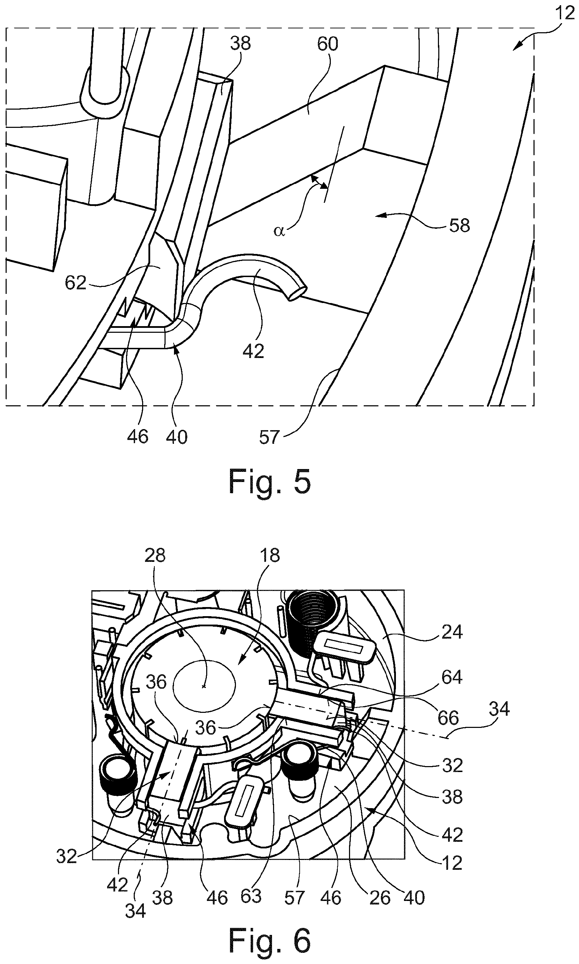

In addition to accommodating a number of electrical or electronic components, the carbon brush holder plate 26 in particular accommodates a plurality of carbon brushes 32 arranged radially with respect to the longitudinal axis 28. The carbon brushes 32, which are formed in a substantially block-shaped manner with a longitudinal axis 34, each have, according to fig. 6, a first end surface 36 which lies against the outer circumference of the collector 18 in the operating position. In the operating position, the second end surface 38 opposite the first end surface 36 interacts with a spring element 40 in such a manner that a contact section 42 of the spring element 40, said contact section being of curved design, is in spring-pretensioned contact on the second end surface 38 in the operating position of the windscreen wiper motor 10 and presses the first end surface 36 of the carbon brush 32 against the collector 18. Furthermore, the carbon brush 32 is electrically in contact in a manner known per se and therefore not shown with a pigtail lead or similar which, in turn, serves for the electrical contact connection of the electric motor 14 in the region of a connecting plug 44.

The carbon brush 32 is arranged in a longitudinally displaceable manner, i.e. in the direction of its longitudinal axis 34, within a guide element 46, which is preferably formed monolithically with the carbon brush holder plate 26. The guide element 46 surrounds the cross section of the carbon brush 32 with only little play.

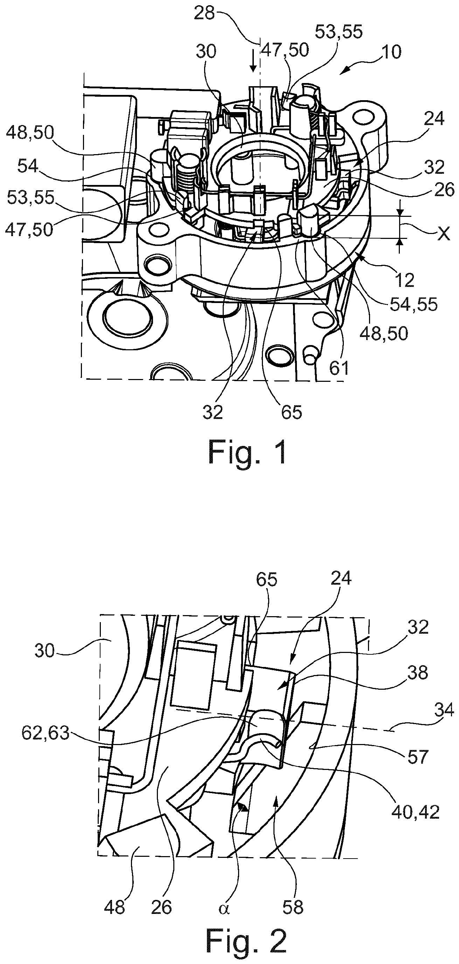

As can best be seen with reference to fig. 1, the outer circumference of the carbon brush holder plate 26 has at least two notches 47 and two cross-sectionally semicircular protrusions 48 which serve as guide elements 50 during the installation of the carbon brush holder plate 26 into the recess 24 of the transmission housing 12 in an installation direction 52 running perpendicular to the plane of the carbon brush holder plate 26 or parallel to the longitudinal axis 28 thereof. The indentations 47 and protrusions 48 interact with diametrically opposed projections 53 and longitudinal grooves 54 on the inner wall of the recess 24 of the transmission housing 12, wherein the projections 53 and the longitudinal grooves 54 form mating elements 55 for the guide elements 50.

Outside the transmission housing 12, the anchor 16 of the electric motor 14 is surrounded by a pot-shaped motor housing 56 which can be seen only in fig. 3 and is conventionally also referred to as a pole pot housing, wherein permanent magnet elements (which cannot be seen) are arranged on the inner circumference of the motor housing 56 and interact with the windings of the anchor 16 in a manner known per se.

As can best be seen with reference to figs. 2, 4 and 5, each of the carbon brushes 32 or each of the second end surfaces 38 of the carbon brushes 32 interacts with a rib-like activation device 58 which is arranged on an inner wall 57 of the recess 24 and is connected monolithically to the transmission housing 12. The activation device 58 as a component part of the transmission housing 12 has a flat contact surface 60 running at an oblique angle α with respect to the longitudinal axis 28 of the carbon brush holder plate 26.

Figs. 1 to 3 illustrate an assembly position of the carbon brush holder plate 26, in which the latter has not yet taken up its final axial position or its operating position within the recess 24 of the transmission housing 12. This is illustrated with reference to fig. 1 by way of a dimension x by which the protrusion 48 protrudes axially over an end-side edge 61 of the recess 24. According to fig. 2, in this position the contact section 42 of the spring element 40 is arranged under spring pretension in the region of an arched depression 62 of that side surface 63 of the carbon brush 32 which faces the spring element 40. This has the effect that the side surface 64 of the carbon brush 32 opposite the side surface 63 lies against an inner side, which can be seen in particular in fig. 6, of the side wall 66 of the guide element 46 forming a frictional connection 65.

In the assembly position illustrated in figs. 1 and 2, the first end surface 36 of the carbon brush 32 is arranged at such a distance from the longitudinal axis 28 or the passage opening 30 of the carbon brush holder plate 26 that the anchor 16 can be pushed in axially with its collector 18 to the height of the carbon brushes 32.

The assembly of the windscreen wiper motor 10, in particular of the carbon brush holder plate 26 thereof into the transmission housing 12, and the anchor 16 is described as follows: first of all, the carbon brush holder plate 26, according to the illustration of figs. 1 and 2, is in an assembly position in which the first end surfaces 36 of the carbon brushes 32 are arranged in their position spaced apart from the collector 18. Said assembly position is furthermore characterized in that there is optionally just contact between the carbon brush 32 and the contact surface 60 of the activation device 58.

Subsequently, according to the illustration of fig. 3, the anchor 16 is moved with its collector 18 in the assembly direction 52 until the collector 18 is at the height of the carbon brushes 32. Both the carbon brush holder plate 26 and the anchor 16 are subsequently moved further, preferably synchronously, in the direction of the assembly direction 52. In the process, the carbon brush 32 enters into operative connection with the contact surface 60 of the activation device 58. This has the result that, according to the illustration of fig. 5, the second end surface 38 of the carbon brush 32 is pressed in the direction of the longitudinal axis 28, i.e. in the direction of the collector 18. This in turn has the result that the contact section 42 of the spring element 40 is first of all moved out of the depression 62 of the side surface 63 of the carbon brush 32 and subsequently enters into operative connection with the second end surface 38 of the carbon brush 32, according to the illustration of fig. 5.

By the spring element 40 pressing against the second end surface 38 of the carbon brush 32, the latter, according to the illustration of fig. 6, is forced with its first end surface 36 against the collector 18, with the second end surface 38 simultaneously being spaced apart from the contact surface 60 of the activation device 58.

Either at the same time as the discussed assembly operation of the anchor 16 and the carbon brush holder plate 26 into the recess 24 of the transmission housing 12 or in a subsequent assembly operation, the motor housing 56 which is provided with the permanent magnet elements is then pushed over the anchor 16 and connected to the transmission housing 12.

### List of reference signs

- 10: Windscreen wiper motor
- 12: Transmission housing
- 14: Electric motor
- 16: Anchor
- 18: Collector
- 20: Anchor shaft
- 22: Toothing region
- 24: Recess
- 26: Carbon brush holder plate
- 28: Longitudinal axis
- 30: Passage opening
- 32: Carbon brush
- 34: Longitudinal axis
- 36: First end surface
- 38: Second end surface
- 40: Spring element
- 42: Contact section
- 44: Connecting plug
- 46: Guide element
- 47: Notch
- 48: Protrusion
- 50: Guide element
- 52: Assembly direction
- 53: Projection
- 54: Longitudinal groove
- 55: Counter-element
- 56: Motor housing
- 57: Inner wall of the recess
- 58: Activation device
- 60: Contact surface
- 61: Edge
- 62: Depression
- 63: Side surface
- 64: Side surface
- 65: Frictional connection
- 66: Side wall

- α: Angle
- x: Dimension

## Claims

1. Windscreen wiper motor (10) with a motor housing (56) of an electric motor (14) being connectable with a transmission housing (12), the electric motor (14) which comprises an anchor (16) with a collector (18) and a carbon brush holder plate (26) working together with the collector (18), wherein the carbon brush holder plate (26) has a guide element (46) for a carbon brush (32), wherein the carbon brush (32) is arranged in the guide element (46) so as to be longitudinally displaceable in a longitudinal axis (34) of the carbon brush (32), with a first end surface (36) of the carbon brush (32) which is designed to be in contact with the collector (18), with, opposite the first end surface (36), a second end surface (38), on which, in an operating position, a spring element (40) is in spring-pretensioned contact in order to press the carbon brush (32) in the direction of the collector (18), wherein the spring element (40), when the carbon brush holder (26) is assembled, is in spring-pretensioned contact on a side surface (63) of the carbon brush (32) and presses the carbon brush (32) against the guide element (46) forming a frictional connection (65), so that the first end surface (36) of the carbon brush (32) is positioned at a distance from the collector (18) and wherein an activation device (58) is provided which interacts with the second end surface (38) of the carbon brush (32) and which in the case of contact and a relative movement between the activation device (58) and the second end face (38) is designed to displace the carbon brush (32) in the guide element (46) in the direction of the longitudinal axis (34) so that the spring element (40) comes into operative connection with the second end face (38) of the carbon brush (32),
**characterised in that**
the activation device (58) is designed as a component part of the transmission housing (12).

2. Windscreen wiper motor according to claim 1
**characterised in that**
the activation device (58) has a contact surface (60), the radial distance of which with regard to a longitudianl axis (28) of the carbon brush holder plate (26) decreases in an assembly direction (52) of the carbon brush holder plate (26) in the transmission housing (12).

3. Windscreen wiper motor according to claim 2
**characterised in that**
the contact surface (60) is in the form of a slope which extends at an angle (α) to the longitudianl axis (28) of the carbon brush holder plate (26).

4. Windscreen wiper motor according to claims 2 or 3
**characterised in that**
the contact surface (60) is designed in a ribbed manner on an inner housing wall (57) of a recess (24) of the transmission housing (12).

5. Windscreen wiper motor according to any one of claims 1 to 4
**characterised in that**
the carbon brush holder plate (26) is made of plastic and **in that** the guide element (46) is monolithically formed on the carbon brush holder plate (26) .

6. Windscreen wiper motor according to any one of claims 1 to 5
**characterised in that**
the side surface (63) of the carbon brush (32) has a recess (62) in which in the assembled position of the carbon brush holder plate (26) a contact section (42) of the spring element (40) is in positively-connected contact so that the carbon brush (32) is aligned in the direction of the longitudinal axis (34) to the guide element (46).

7. Windscreen wiper motor according to claim 6
**characterised in that**
the contact section (42) is curved and can be applied to both the side surface (63) as well as to the second end surface (38) of the carbon brush (32) .

8. Windscreen wiper motor according to any one of claims 1 to 7
**characterised in that**
formed on the carbon brush holder plate (26) is at least one guide element (50) for positioning the carbon brush holder plate (26) in relation to the transmission housing (12) when assembling the carbon brush holder plate (26) in the transmission housing (12), wherein the at least one guide element (50) interacts with a counter-element (55) on the transmission housing (12).

9. Windscreen wiper motor according to claim 8
**characterised in that**
several guide elements (50) and interacting counter-elements (55) are provided.

10. Windscreen wiper motor according to claim 8 or 9
**characterised in that**
the at least one guide element (50) is arranged on an outer circumference of the carbon brush holder plate (26).

11. Method of assembling a windscreen wiper motor (10) designed according to any one of claims 1 to 10
**characterised in that**
the assembly comprises at least the following steps:
- pre-assembly of the carbon brush holder plate (26) in the transmission housing(12), wherein the carbon brush (32) is arranged in the assembly position and the carbon brush holder plate (26) is arranged in an intermediate position at a distance from the operating position in the transmission housing (12)
- axial insertion of the anchor (16) into the transmission housing (12) up to a position in which the collector (18) overlaps the carbon brush (32)
- joint parallel movement of the carbon brush holder plate (26) and the anchor (16) from the intermediate position into the operating position, wherein the activation device (58) through coming into contact with the carbon brush (32) moves the carbon brush (32) in the guide element (46) in the direction towards the collector (18) until the spring element (40) comes into contact with the second end face (38) of the carbon brush (32) and presses this against the collector (18).

## Patentansprüche

1. Scheibenwischermotor (10) mit einem Motorgehäuse (56) eines Elektromotors (14), verbindbar mit einem Getriebegehäuse (12), wobei der Elektromotor (14) Folgendes umfasst: einen Anker (16) mit einem Kollektor (18) und einer Kohlebürstenhalteplatte (26), die mit dem Kollektor (18) zusammenwirkt, wobei die Kohlebürstenhalteplatte (26) ein Führungselement (46) für eine Kohlebürste (32) aufweist, wobei die Kohlebürste (32) im Führungselement (46) angeordnet ist, um in einer Längsachse (34) der Kohlebürste (32) längs versetzbar zu sein, mit einer ersten Endoberfläche (36) der Kohlebürste (32), die dazu ausgestaltet ist, in Kontakt mit dem Kollektor (18) zu sein, mit, gegenüber der ersten Endoberfläche (36), einer zweiten Endoberfläche (38), auf der, in einer Betriebsposition, ein Federelement (40) in einem federvorgespannten Kontakt ist, um die Kohlebürste (32) in die Richtung des Kollektors (18) zu drücken, wobei das Federelement (40), wenn der Kohlebürstenhalter (26) zusammengebaut wird, in einem federvorgespannten Kontakt auf einer Seitenoberfläche (63) der Kohlebürste (32) ist und die Kohlebürste (32) gegen das Führungselement (46) drückt, eine Reibverbindung (65) bildend, sodass die erste Endoberfläche (36) der Kohlebürste (32) in einem Abstand vom Kollektor (18) positioniert ist, und wobei eine Aktivierungsvorrichtung (58) bereitgestellt ist, die mit der zweiten Endoberfläche (38) der Kohlebürste (32) interagiert und die im Falle eines Kontakts und einer relativen Bewegung zwischen der Aktivierungsvorrichtung (58) und der zweiten Endfläche (38) dazu ausgestaltet ist, die Kohlebürste (32) im Führungselement (46) in die Richtung der Längsachse (34) zu versetzen, sodass das Federelement (40) in Wirkverbindung mit der zweiten Endfläche (38) der Kohlebürste (32) kommt,
**dadurch gekennzeichnet, dass**
die Aktivierungsvorrichtung (58) als ein Komponententeil des Getriebegehäuses (12) ausgestaltet ist.

2. Scheibenwischermotor nach Anspruch 1,
**dadurch gekennzeichnet, dass**
die Aktivierungsvorrichtung (58) eine Kontaktoberfläche (60) aufweist, deren radialer Abstand bezüglich einer Längsachse (28) der Kohlebürstenhalteplatte (26) sich in einer Zusammenbaurichtung (52) der Kohlebürstenhalteplatte (26) im Getriebegehäuse (12) verringert.

3. Scheibenwischermotor nach Anspruch 2,
**dadurch gekennzeichnet, dass**
die Kontaktoberfläche (60) in der Form einer Schräge ist, die sich in einem Winkel (α) zur Längsachse (28) der Kohlebürstenhalteplatte (26) erstreckt.

4. Scheibenwischermotor nach Anspruch 2 oder 3,
**dadurch gekennzeichnet, dass**
die Kontaktoberfläche (60) in einer gerippten Weise an einer inneren Gehäusewand (57) einer Vertiefung (24) des Getriebegehäuses (12) ausgestaltet ist.

5. Scheibenwischermotor nach einem der Ansprüche 1 bis 4,
**dadurch gekennzeichnet, dass**
die Kohlebürstenhalteplatte (26) aus Kunststoff gefertigt ist und dass das Führungselement (46) an der Kohlebürstenhalteplatte (26) monolithisch ausgebildet ist.

6. Scheibenwischermotor nach einem der Ansprüche 1 bis 5,
**dadurch gekennzeichnet, dass**
die Seitenoberfläche (63) der Kohlebürste (32) eine Vertiefung (62) aufweist, in der, in der zusammengebauten Position der Kohlebürstenhalteplatte (26), ein Kontaktabschnitt (42) des Federelements (40) in formschlüssigem Kontakt ist, sodass die Kohlebürste (32) in der Richtung der Längsachse (34) mit dem Führungselement (46) ausgerichtet ist.

7. Scheibenwischermotor nach Anspruch 6,
**dadurch gekennzeichnet, dass**
der Kontaktabschnitt (42) gekrümmt ist und sowohl auf die Seitenoberfläche (63) als auch auf die zweite Endoberfläche (38) der Kohlebürste (32) angewendet werden kann.

8. Scheibenwischermotor nach einem der Ansprüche 1 bis 7,
**dadurch gekennzeichnet, dass**
auf der Kohlebürstenhalteplatte (26) zumindest ein Führungselement (50) ausgebildet ist zum Positionieren der Kohlebürstenhalteplatte (26) in Beziehung zum Getriebegehäuse (12) beim Zusammenbauen der Kohlebürstenhalteplatte (26) im Getriebegehäuse (12), wobei das zumindest eine Führungselement (50) mit einem Gegenelement (55) am Getriebegehäuse (12) interagiert.

9. Scheibenwischermotor nach Anspruch 8,
**dadurch gekennzeichnet, dass**
mehrere Führungselemente (50) und interagierende Gegenelemente (55) bereitgestellt sind.

10. Scheibenwischermotor nach Anspruch 8 oder 9,
**dadurch gekennzeichnet, dass**
das zumindest eine Führungselement (50) an einem äußeren Umfang der Kohlebürstenhalteplatte (26) angeordnet ist.

11. Verfahren zum Zusammenbau eines Scheibenwischermotors (10) nach einem der Ansprüche 1 bis 10,
**dadurch gekennzeichnet, dass**
der Zusammenbau zumindest die folgenden Schritte umfasst:
- Vorabmontage der Kohlebürstenhalteplatte (26) im Getriebegehäuse (12), wobei die Kohlebürste (32) in der Zusammenbauposition angeordnet ist und die Kohlebürstenhalteplatte (26) in einer Zwischenposition in einem Abstand von der Betriebsposition im Getriebegehäuse (12) angeordnet ist
- axiale Einsetzung des Ankers (16) in das Getriebegehäuse (12) bis zu einer Position, in der der Kollektor (18) die Kohlebürste (32) überlappt
- gemeinsame parallele Bewegung der Kohlebürstenhalteplatte (26) und des Ankers (16) aus der Zwischenposition in die Betriebsposition, wobei die Aktivierungsvorrichtung (58), durch Inkontaktkommen mit der Kohlebürste (32), die Kohlebürste (32) im Führungselement (46) in die Richtung hin zum Kollektor (18) bewegt, bis das Federelement (40) in Kontakt mit der zweiten Endfläche (38) der Kohlebürste (32) kommt und diese gegen den Kollektor (18) drückt.

## Revendications

1. Moteur d'essuie-glace de pare-brise (10) avec un carter de moteur (56) d'un moteur électrique (14) étant reliable à un carter de transmission (12), le moteur électrique (14) qui comprend un ancrage (16) avec un collecteur (18) et une plaque porte-balais de carbone (26) fonctionnant conjointement avec le collecteur (18),
dans lequel la plaque porte-balais de carbone (26) a un élément de guidage (46) pour un balai de carbone (32), dans lequel le balai de carbone (32) est agencé dans l'élément de guidage (46) afin d'être longitudinalement déplaçable dans un axe longitudinal (34) du balai de carbone (32), avec une première surface d'extrémité (36) du balai de carbone (32) qui est conçue pour être en contact avec le collecteur (18), avec, en face de la première surface d'extrémité (36), une seconde surface d'extrémité (38), sur laquelle, dans une position de fonctionnement, un élément ressort (40) est en contact pré-tendu par ressort afin de presser le balai de carbone (32) dans la direction du collecteur (18), dans lequel l'élément ressort (40), lorsque le porte-balais de carbone (26) est assemblé, est en contact pré-tendu par ressort sur une surface latérale (63) du balai de carbone (32) et presse le balai de carbone (32) contre l'élément de guidage (46) formant une liaison à frottement (65), pour que la première surface d'extrémité (36) du balai de carbone (32) soit positionnée à une distance du collecteur (18), et dans lequel un dispositif d'activation (58) est prévu qui interagit avec la seconde surface d'extrémité (38) du balai de carbone (32) et qui, dans le cas de contact et d'un mouvement relatif entre le dispositif d'activation (58) et la seconde surface d'extrémité (38), est conçu pour déplacer le balai de carbone (32) dans l'élément de guidage (46) dans la direction de l'axe longitudinal (34) pour que l'élément ressort (40) entre en liaison fonctionnelle avec la seconde surface d'extrémité (38) du balai de carbone (32),
**caractérisé en ce que**
le dispositif d'activation (58) est conçu sous forme de partie composante du carter de transmission (12).

2. Moteur d'essuie-glace de pare-brise selon la revendication 1,
**caractérisé en ce que**
le dispositif d'activation (58) a une surface de contact (60), dont la distance radiale en ce qui concerne un axe longitudinal (28) de la plaque porte-balais de carbone (26) diminue dans une direction d'assemblage (52) de la plaque porte-balais de carbone (26) dans le carter de transmission (12).

3. Moteur d'essuie-glace de pare-brise selon la revendication 2,
**caractérisé en ce que**
la surface de contact (60) est sous la forme d'une pente qui s'étend à un angle (α) par rapport à l'axe longitudinal (28) de la plaque porte-balais de carbone (26).

4. Moteur d'essuie-glace de pare-brise selon les revendications 2 ou 3,
**caractérisé en ce que**
la surface de contact (60) est conçue de manière nervurée sur une paroi de carter intérieure (57) d'un évidement (24) du carter de transmission (12).

5. Moteur d'essuie-glace de pare-brise selon l'une quelconque des revendications 1 à 4,
**caractérisé en ce que**
la plaque porte-balais de carbone (26) est faite de plastique et **en ce que** l'élément de guidage (46) est formé de façon monolithique sur la plaque porte-balais de carbone (26).

6. Moteur d'essuie-glace de pare-brise selon l'une quelconque des revendications 1 à 5,
**caractérisé en ce que**
la surface latérale (63) du balai de carbone (32) a un évidement (62) dans lequel, dans la position assemblée de la plaque porte-balais de carbone (26), une section de contact (42) de l'élément ressort (40) est en contact positivement relié pour que le balai de carbone (32) soit aligné dans la direction de l'axe longitudinal (34) par rapport à l'élément de guidage (46).

7. Moteur d'essuie-glace de pare-brise selon la revendication 6,
**caractérisé en ce que**
la section de contact (42) est incurvée et peut être appliquée sur à la fois la surface latérale (63) ainsi que sur la seconde surface d'extrémité (38) du balai de carbone (32) .

8. Moteur d'essuie-glace de pare-brise selon l'une quelconque des revendications 1 à 7,
**caractérisé en ce que**
formé sur la plaque porte-balais de carbone (26) est au moins un élément de guidage (50) pour positionner la plaque porte-balais de carbone (26) par rapport au carter de transmission (12) lors de l'assemblage de la plaque porte-balais de carbone (26) dans le carter de transmission (12), dans lequel l'au moins un élément de guidage (50) interagit avec un contre-élément (55) sur le carter de transmission (12).

9. Moteur d'essuie-glace de pare-brise selon la revendication 8,
**caractérisé en ce que**
plusieurs éléments de guidage (50) et contre-éléments d'interaction (55) sont prévus.

10. Moteur d'essuie-glace de pare-brise selon la revendication 8 ou 9,
**caractérisé en ce que**
l'au moins un élément de guidage (50) est agencé sur une circonférence extérieure de la plaque porte-balais de carbone (26) .

11. Procédé d'assemblage d'un moteur d'essuie-glace de pare-brise (10) conçu selon l'une quelconque des revendications 1 à 10, **caractérisé en ce que**
l'assemblage comprend au moins les étapes suivantes :
- le pré-assemblage de la plaque porte-balais de carbone (26) dans le carter de transmission (12), dans lequel le balai de carbone (32) est agencé dans la position d'assemblage et la plaque porte-balais de carbone (26) est agencée dans une position intermédiaire à une distance de la position de fonctionnement dans le carter de transmission (12),
- l'insertion axiale de l'ancrage (16) dans le carter de transmission (12) jusqu'à une position dans laquelle le collecteur (18) chevauche le balai de carbone (32)
- le mouvement parallèle conjoint de la plaque porte-balais de carbone (26) et de l'ancrage (16) depuis la position intermédiaire jusqu'à la position de fonctionnement, dans lequel le dispositif d'activation (58), en entrant en contact avec le balai de carbone (32), met en mouvement le balai de carbone (32) dans l'élément de guidage (46) dans la direction vers le collecteur (18) jusqu'à ce que l'élément ressort (40) entre en contact avec la seconde surface d'extrémité (38) du balai de carbone (32) et presse celui-ci contre le collecteur (18).
